# EUROPÄISCHE PATENTSCHRIFT

(11) **EP 4 399 048 B1**
(45) Veröffentlichungstag und Bekanntmachung des Hinweises auf die Patenterteilung: **03.09.2025**
(21) Anmeldenummer: 22786837.9
(22) Anmeldetag: 09.09.2022
(51) Int. Cl.: B23K 11/00, B21F 23/00, B21F 27/10, B21F 27/20, B23K 101/22

(54) **VERFAHREN UND ANLAGE ZUM HERSTELLEN EINER DRAHTGITTERMATTE AUS SICH KREUZENDEN LÄNGSDRÄHTEN UND QUERDRÄHTEN**
METHOD AND FACILITY FOR PRODUCING A WIRE MESH MAT CONSISTING OF INTERSECTING LONGITUDINAL AND TRANSVERSE WIRES
PROCÉDÉ ET INSTALLATION DE FABRICATION D'UN TREILLIS DE FILS MÉTALLIQUES SE COMPOSANT DE FILS LONGITUDINAUX ET DE FILS TRANSVERSAUX QUI SE CROISENT

(30) Priorität: 10.09.2021 AT 507172021
(43) Veröffentlichungstag der Anmeldung: 17.07.2024
(73) Patentinhaber: EVG Entwicklungs- und Verwertungsgesellschaft m.b.H., 8074 Raaba (AT)
(72) Erfinder: TREMMEL, Robert, 8042 Graz (AT); BACI, Andreas, 8010 Graz (AT)
(74) Vertreter: Schober, Elisabeth
(86) Internationale Anmeldenummer: PCT/IB2022/058521
(87) Internationale Veröffentlichungsnummer: WO 2023/037314

(56) Entgegenhaltungen:
- DE-B- 1 287 547
- DE-U1- 29 714 110
- US-A1- 2018 056 364

## Beschreibung

Die Erfindung betrifft ein Verfahren zum Herstellen einer Drahtgittermatte aus sich kreuzenden Längsdrähten und Querdrähten sowie eine Gitterschweißanlage zum Schweißen einer Drahtgittermatte aus sich kreuzenden Längsdrähten und Querdrähten (siehe Ansprüche 1 und 6) mit einer getakteten Zufuhrvorrichtung für eine Schar von Längsdrähten in eine X-Richtung, mit einer Zubringervorrichtung für senkrecht zu den Längsdrähten liegenden Querdrähten sowie mit einem Schweißportal zum Verschweißen der Drähte an ihren Kreuzungspunkten, mit einem Aufnahmetisch und wobei eine taktweise in X-Richtung hin und her zwischen dem Aufnahmetisch und den Schweißportal verfahrbare Längsdrahtzuführeinheit angeordnet ist, die ihrerseits Längsdrahtzangenelemente für die Längsdrähte aufweist, wobei ferner die Längsdrahtzuführeinheit in Y-Richtung verfahrbar ist.

Stand der Technik ist die Herstellung von Bewehrungsgittererzeugnissen mit Einschränkungen hinsichtlich Produktteilung, d.h. der Variation von Maschenbreite, Maschenlänge innerhalb einer Drahtgittermatte oder zwischen aufeinanderfolgend produzierten Drahtgittermatten. Bislang wird an automatisierten Drahtgitterschweißanlagen eine Produktteilung eingestellt und sodann eine Matte oder eine Serie hergestellt, in dem die Anlage automatisch Längsdrähte und Querdrähte aus einem Vorrat nimmt und in den gewünschten Positionen verschweißt. Aufgrund des steigenden Individualisierungsgrads sowie der Optimierung des Materialeinsatzes werden zukünftig festigkeits- und designoptimierte Endprodukte gefordert. Freie Produktformen (Sonderprodukte) sind bislang noch nicht realisiert.

Aus DE 297 14 110 U (offenbarend den Oberbegriff der Ansprüche 1 und 6) ist ist eine verfahrbare Zuführtraverse, mit der Stäbe in eine Verarbeitungsmaschine eingeführt werden, bekannt. In einer Ausführungsform ist die Zuführtraverse über eine Verstellvorrichtung seitlich verschiebbar. Dabei legt der Abstand der in die Zuführtraverse eingelegten Längsdrähte zueinander die Maschenbreite der fertigen Drahtgittermatten fest.

In der aus US 2018/056364 bekannten Gitterschweißanlage wird der Abstand der Längsdrähte zueinander, der die Maschenbreite der fertigen Drahtgittermatten bestimmt, durch entsprechendes Positionieren von Aufnahmeeinrichtungen zur Aufnahme der Längsdrähte auf einem Querförderer vor der Übergabe in eine nicht seitlich, d.h. in Y-Richtung, verschiebbare Zufuhreinrichtung festgelegt.

DE 1 287 547 beschreibt eine Vorrichtung zur stufenlosen Einstellung des Abstandes von Längsstabführungen an Gitterschweißmaschinen, worin die Längsstabführungen in Längsrichtung durch eine Führungsleiste unverschiebbar gehalten werden.

Ziel ist es, ein Verfahren und eine Anlage zu schaffen, welche eine vollflexible Gestaltung von Gittermatten ermöglicht. Die Lösung soll zudem wirtschaftlich bereitzustellen sein.

Das erfindungsgemäße Verfahren erreicht dies dadurch, dass es die Schritte umfasst:
(i) Vorschub einer Schar von Längsdrähten entlang einer X-Richtung zu einem Schweißportal mit Schweißeinheiten, wobei die Längsdrähte durch lösbare und sich in X-Richtung mitbewegbare Längsdrahtzangenelemente parallel zueinander in einem feststehenden Raster bewegt und gehalten werden,
(ii) Schweißen mindestens eines ersten Längsdrahtes mit einem ersten Querdraht,
(iii) Lösen der Klemmung des mindestens einen ersten Längsdrahtes und Fahren der nichtverschweißten Längsdrähte in (-Y)-Richtung, welche im Wesentlichen senkrecht zur X-Richtung liegt, um das Raster mindestens eines Längsdrahtes zu ändern,
(iv) Schweißen mindestens eines zweiten Längsdrahtes mit dem ersten Querdraht,
(vii) mehrmaliger, getakteter Vorschub der Schar von Längsdrähten in X-Richtung und gleichzeitiges Schweißen aller zuvor geschweißter Längsdrähte mit einem zweiten und weiteren Querdrähten.

In einer Ausführungsform der Erfindung folgt auf Schritt (iv) und vor Schritt (vii):
(v) Lösen der Klemmung des mindestens einen zweiten Längsdrahtes und Fahren der nichtverschweißten Längsdrähte in (+Y)-Richtung oder in (-Y)-Richtung,
(vi) Schweißen mindestens eines dritten Längsdrahtes mit dem ersten Querdraht.

In einer Ausführungsform der Erfindung umfasst der Schritt (i) die Teilschritte:
(i-a) Entnahme einer Schar von Längsdrähten, die in einem feststehenden Raster durch Längsdrahtführungselemente auf einem Aufnahmetisch bereitgehalten werden, durch eine Längsdrahtzuführeinheit, die an den Aufnahmetisch in (-X)-Richtung heranfahrbar ist, und an welcher die Längsdrähte in Längsdrahtzangenelementen je nach erforderlichem Längsdrahtüberstand geklemmt werden,
(i-b) Fahren der Längsdrahtzuführeinheit in (+X)-Richtung mitsamt der Längsdrahtschar.

In einem weiteren Schritt (viii) kann ein Auszug einer Drahtgittermatte hinter dem Schweißportal mit einem in X-Richtung beweglichen Auszugsbalken, welcher mit einer Vielzahl von Haken- oder Zangenelementen temporär an einem der Querdrähte einer Drahtgittermatte einhakt oder eingreift.

Es ist weiters denkbar, dass in Schritt (viii) von einer Vielzahl von Haken- oder Zangenelementen nur diejenigen in Wirkung gesetzt werden, die gemäß des produzierten Rasters an der Drahtgittermatte zwischen zwei benachbarten Längsdrähten liegen.

Die erfindungsgemäße Gitterschweißanlage erreicht die Ziele dadurch, dass der Aufnahmetisch zur Aufnahme der Schar parallel und mit Längsdrahtführungselemente in einem feststehenden Raster zueinander liegender Längsdrähte vorgesehen ist, wobei ferner die Längsdrahtzuführeinheit in Y-Richtung verfahrbar ist, und wobei der Abstand des Schweißportals von den Längsdrahtführungselementen des Aufnahmetisches mindestens so bemessen ist, dass ein darin befindlicher Längsdraht bei maximaler Auslenkung im elastischen Bereich verformbar bleibt.

In einer Ausführungsform der Erfindung sind im Schweißportal eine Vielzahl von Schweißeinheiten vorgesehen, vor denen in Produktionsrichtung X gesehen jeweils eine Fixiereinheit für einen Längsdraht angeordnet ist.

In einer weiteren Variation ist im Schweißportal eine Vielzahl von Schweißeinheiten vorgesehen, an denen jeweils ein Querdrahtanschlag angeordnet ist.

Es ist ebenso denkbar, dass in Produktionsrichtung X gesehen nach dem Schweißportal ein in X-Richtung bewegbarer, sich im Wesentlichen in Y-Richtung erstreckender Auszugsbalken mit einer Vielzahl von Haken- oder Zangenelementen zum Transport von Drahtgittermatten angeordnet ist, wobei die Hakenelemente einzeln zwischen zwei Positionen schwenkbar sind, in welchen die Hakenelemente entweder außerhalb der Gitterebene oder innerhalb der Gitterebene befindlich sind.

Es ist weiters vorgesehen, dass in einer Ausführungsform am Auszugsbalken mindestens eine Führungsplatte vorgesehen ist, welche sich in einem vorbestimmten Abstand oberhalb der Gitterebene erstreckt, und welche Durchlässe für die Hakenelemente aufweist, durch die die Hakenelemente zwischen den beiden Positionen verfahrbar sind.

Die Erfindung wird nachstehend anhand eines in den Zeichnungen dargestellten Ausführungsbeispiels näher erläutert. Es zeigen: Fig. 1 bis 7 eine schematische Draufsicht auf eine Gitterschweißanlage mit aufeinanderfolgenden Verfahrensschritten, Fig. 8 eine Perspektivansicht einer Einzelpunktschweißvorrichtung, Fig. 9 eine Perspektivansicht eines Teils eines Auszugsbalkens für Drahtgitter und Fig. 10 eine schematische Draufsicht eines Auszugsbalkens mit einem Teil eines Drahtgitters.

Die Anlage besteht aus einem Aufnahmetisch 1 mit fixem Raster R für eine Schar von Längsstäben bzw. Längsdrähten LD. Die entnommenen Längsdrähte LD werden von einer kraftschlüssigen Längsdrahtzuführeinheit 3 entnommen, je nach Produktteilung quer verstellt und der in Y-Richtung variabel querverfahrbaren Schweißwagen 8 mit Fixiereinheiten 6 übergeben und verschweißt.

Das Verfahren zur vollautomatischen Herstellung einer Bewehrungsgittermatte besteht aus den Schritten des Verschweißens einer oder mehrerer Querdrähte QD mit einem oder mehreren voneinander beabstandeten Längsdrähten LD in einem variablen Raster, wobei in einem Schweißtakt ein oder mehrere Längsdrähte LD mit einem selben Querdraht QD verschweißt werden.

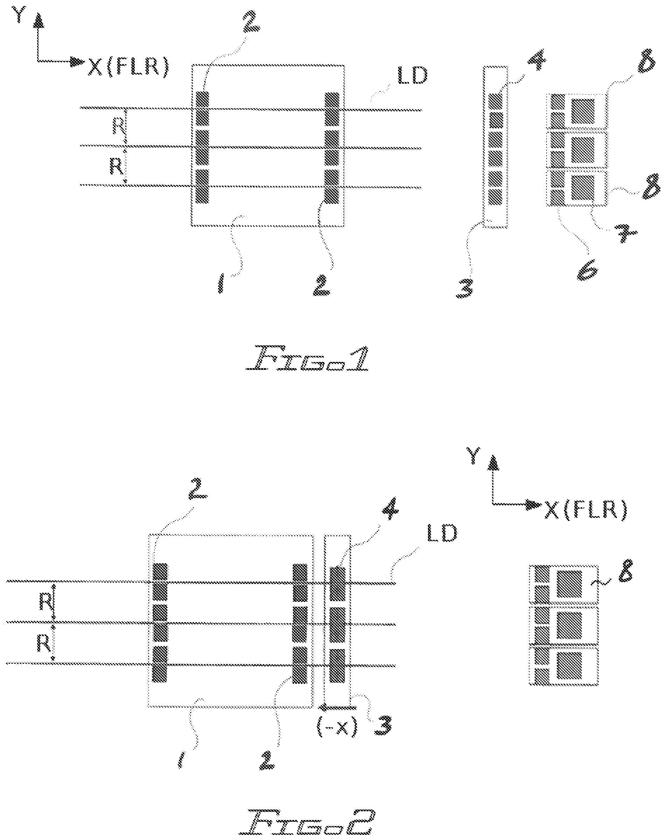

Fig. 1 zeigt die Grundstellung der erfindungsgemäßen Vorrichtung und den Ausgangspunkt des Verfahrens. Beispielhaft ist eine Schar von drei Längsdrähten LD entlang der X-Richtung in Längsdrahtführungselementen 2 auf einem Aufnahmetisch 1 angeordnet. Es können wesentlich mehr Längsdrähte LD, z.B. zwanzig, in der Praxis verwendet werden. Die Längsdrähte LD sind vorzugsweise von einer Richtmaschine (nicht gezeigt) bereitgestellt und in einem feststehenden Raster R parallel zueinander liegend. Mit Raster R sind die Abstände der Längsdrähte LD zueinander gemeint.

Die Schar von Längsdrähten LD definiert zugleich die Ebene in X- und Y-Richtung, welche sie abdecken und in welcher sich die herzustellende Drahtgittermatte erstrecken wird. Dies ist also gleichzeitig auch die Matten- oder auch die Gitterebene.

In (+X)-Richtung fortgesetzt ist eine Längsdrahtzuführeinheit 3 angeordnet, auf welche sich Längsdrahtzangenelemente 4 befinden, und welche in X-Richtung zwischen dem Aufnahmetisch 1 und einem Schweißportal 5 aus einer Vielzahl von Schweißwagen 8 hin- und herfahren kann. Auf der Längsdrahtzuführeinheit 3 sind für jeden Längsdraht LD wirkende Längsdrahtzangenelemente 4 positioniert, die einzeln angesteuert werden können.

Gemäß Fig. 2 fährt die Längsdrahtzuführeinheit 3 gegen die Flussrichtung ((-X)-Richtung) in Aufnahmeposition, und zwar je nach erforderlichem Längsdrahtüberstand. Dort werden die Längsdrähte LD durch temporäre Klemmung in Längsdrahtzangenelementen 4 kraftschlüssig übernommen. Das Raster R bleibt erhalten und gibt die genaue Position zumindest eines ersten Längsdrahtes in Y-Richtung vor.

Die Variabilität der hergestellten Drahtgittermatten betrifft auch die wählbare und veränderbare Länge möglicher Überstände der Längsstäbe bzw. Längsdrähte LD.

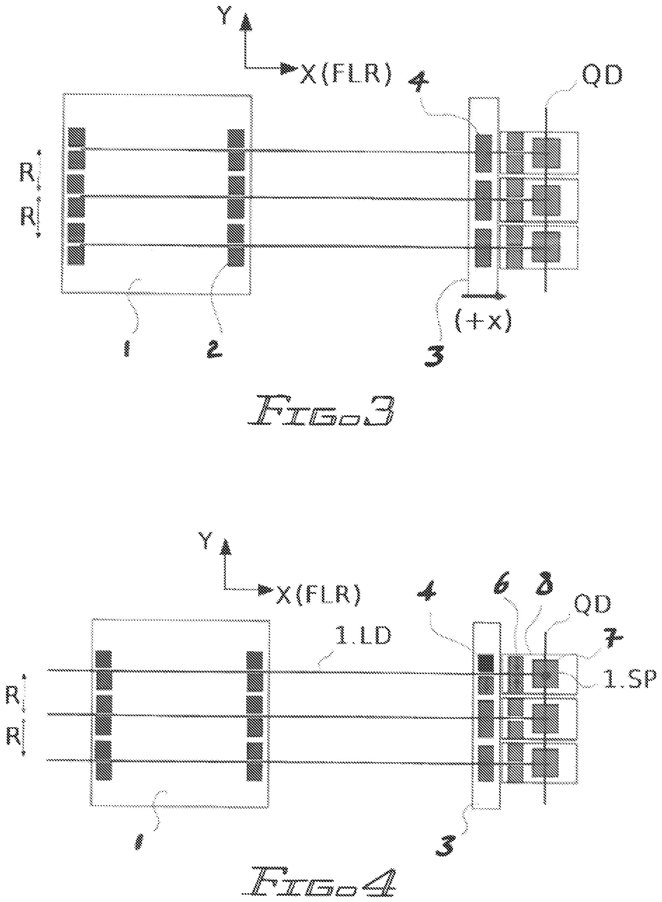

Wie in Fig. 3 gezeigt, wird die Schar von Längsdrähten LD durch translatorisches Fahren der Längsdrahtzuführeinheit 3 in X-Richtung in die Schweißposition je nach Überstand des gewünschten Endproduktes gefahren. Die Längsdrähte LD erreichen im Schweißportal 5 ihre jeweilige Schweißeinheit 7 in einem Schweißwagen 8. Ebenso wird ein Querdraht QD im Wesentlichen senkrecht zu den Längsdrähten LD in die Schweißlinie eingebracht und genau positioniert.

Gemäß Fig. 4 wird nun gleichzeitig oder zeitlich nacheinander das Längsdrahtzangenelement 4 eines ersten Längsdrahtes LD geöffnet sowie eine jeweils für einen Längsdraht LD wirkende Fixiereinheit 6, oder auch Zentriereinheit oder Übernahmeeinheit, vor jeder Schweißeinheit 7 geschlossen. Der Längsdraht LD wird dadurch und in Y-Richtung an dem querverfahrbaren (in Y-Richtung) Schweißwagen 8 fixiert. Anschließend wird der erste Längsdraht LD mit dem Querdraht QD am Schweißpunkt SP durch die Schweißeinheit 7 verschweißt.

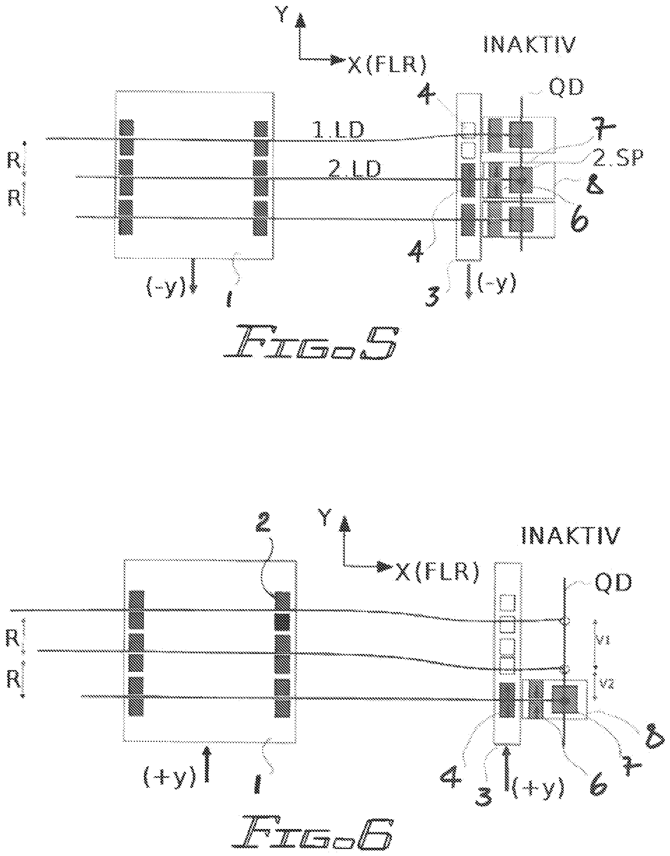

Anschließend wird, wie in Fig. 5 dargestellt, ein zweiter Längsdraht LD mit einer vom Raster R abweichenden Teilung mit dem Querdraht QD verschweißt. Dafür erfolgt eine translatorische Verstellung der Längsdrahtzuführeinheit 3 quer zur Flussrichtung (X-Richtung), und zwar in (-Y)-Richtung. Das Längsdrahtzangenelement 4 vom ersten Längsdraht LD beeinflusst das Erzeugnis nicht mehr mittelbar, da es auf "inaktiv" gestellt wird, d.h. es wird gelöst oder weggefahren. Gleichzeitig wird der Aufnahmetisch 1 in demselben Beispiel in gleicher Richtung (-Y) gefahren.

Es handelt sich hier nur um ein Beispiel. Das Einfahren aller entsprechenden Elemente in (+Y)-Richtung in Abhängigkeit der gewünschten Teilung ist gleichermaßen erfindungsgemäß durchführbar.

Aufgrund der freien Länge, d.h. dem Abstand zwischen Aufnahmetisch 1 und Schweißlinie im Schweißportal 5, die ausreichend groß bemessen ist, findet die nicht vermeidbare Verformung des ersten Längsdrahtes LD im elastischen Bereich statt. Die Reaktionskräfte sind vernachlässigbar hinsichtlich ihres Einflusses auf die Verarbeitung des Endproduktes. In einer Ausführungsform wird ein Längsdraht LD mit einem benachbarten Schweißstößel zusätzlich geklemmt, sollten die Reaktionskräfte nicht mehr im vernachlässigbaren Bereich liegen.

Die freie Länge ist abhängig vom Drahtdurchmesser. In einer erfindungsgemäßen Maschine ist sie hinsichtlich der möglichen, zu verarbeitenden Drahtdurchmesser entsprechend der größten erforderlichen Länge festzusetzen. Die Mechanik zum Verfahren der Längsdrahtzuführeinheit 3 ist entsprechend auszulegen.

Anschließend wird der zweite Längsdraht LD an der Fixiereinheit 6 zentriert sowie festgehalten und mit dem Querdraht QD verschweißt (analog zum Schweißen in Fig. 4). Das Verstellen des Aufnahmetisches 1 dient auch einer exakten Schweißung, da der nun zu verschweißende zweite Längsdraht LD spannungsfrei zu seinem Schweißpunkt SP geführt wird.

In Fig. 6 werden der oder die verbleibenden Längsdrähte LD in (+Y)-Richtung (alternativ in (-Y)-Richtung) wieder zurückgefahren, um dann mit dem Querdraht QD verschweißt zu werden. Dazu wird auch das Längsdrahtzangenelement 4 des zweiten Längsdrahtes LD inaktiv gestellt und sowohl die Längsdrahtzuführeinheit 3 als auch Aufnahmetische 1 in (+Y)-Richtung zurückgefahren. Nach Erreichen der Zielposition wird der dritte Längsdraht LD wie bisher zentriert und verschweißt. Selbstverständlich werden alle möglicherweise im Fahrweg verbliebenen Elemente des Schweißportals 5 gleichermaßen gelöst oder inaktiv gestellt. Die erzielte variable Teilung (das Verhältnis der beiden Abstände V1 und V2) zwischen den bisher verschweißten drei Längsdrähten LD ist nun ungleich eins und weicht ebenso vom Raster R am Aufnahmetisch 1 ab.

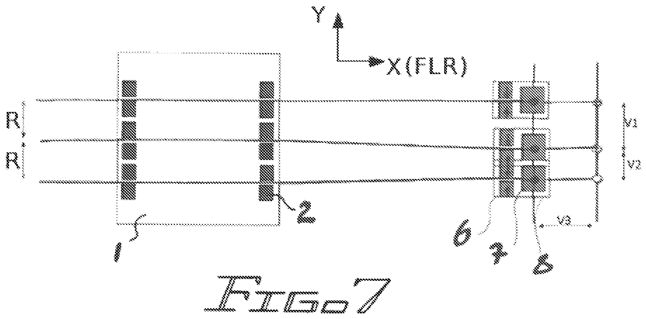

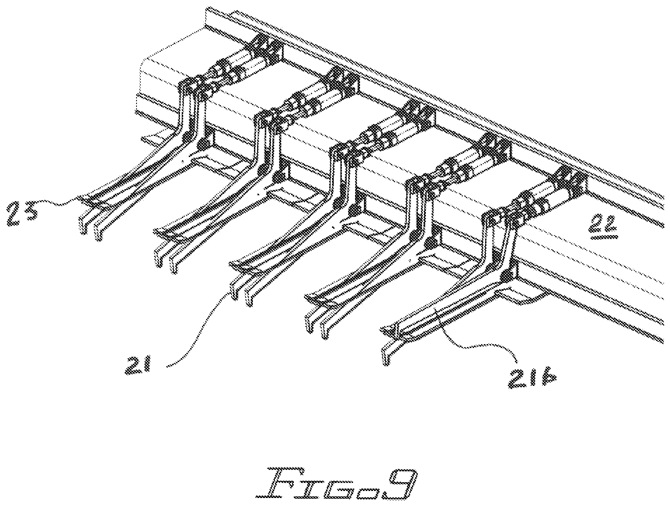

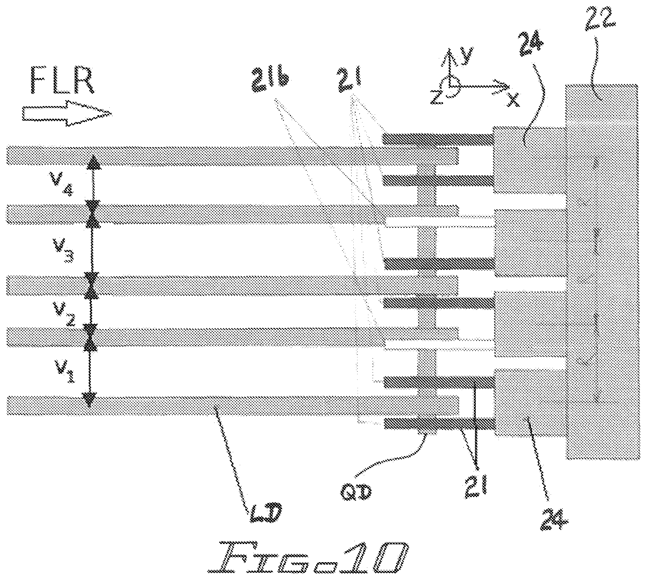

Wie in Fig. 7 zu sehen ist, wird der in diesem Beispiel fertig geschweißte Querdraht QD vorzugsweise durch einen Mattenauszug (Fig. 9 und 10) übernommen und dadurch die entstehende Drahtgittermatte in X-Richtung über eine vorbestimmte Länge V3 bewegt. Ein zweiter Querdraht QD wird im übrigen zugeführt und mit der durch die vorangegangenen Schritte erzeugten variablen Teilung V3 verschweißt. Die Längsdrähte LD werden entweder gleichzeitig oder hintereinander mit dem zweiten Querdraht QD verschweißt. Die Längsdrahtzuführeinheit 3 (in Fig. 7 nicht gezeigt) ist dabei inaktiv. Alle Längsdrähte LD werden für eine exakte Schweißung durch ihre jeweiligen Fixiereinheiten 6 zentriert. Die Schweißeinheiten 7 sind wie zuvor frei in Y-Richtung verfahrbar und entsprechend der zuvor erzeugten Teilung bereits angeordnet.

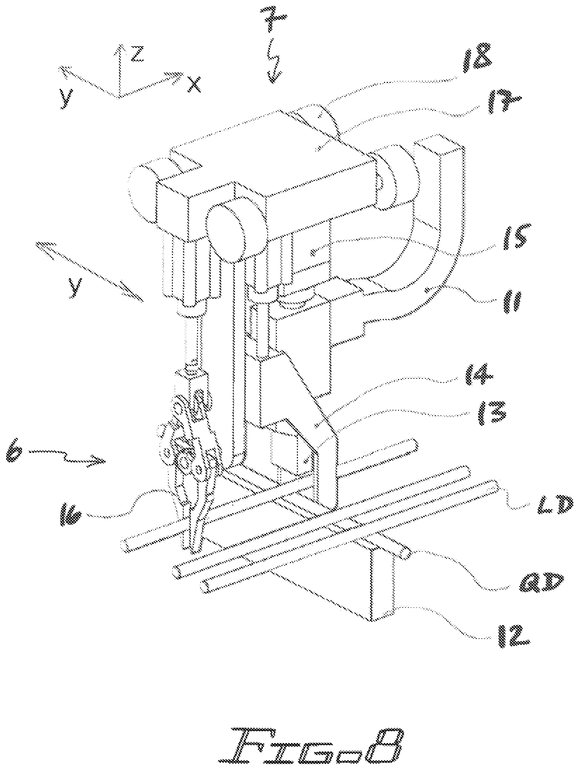

Fig. 8 zeigt einen Schweißwagen 8 mit Fixiereinheit 6 im Detail. Der Schweißwagen 8 weist einen verfahrbaren Schweißkopf auf, der umfasst: einen Schweißkopfrahmen 17 mit einem Fahrwerk 18, an welchem eine Schweißkraftaufbringung 15 hängt. Letztere bewegt eine Schweißelektrode 13, die über ein Stromband 11 elektrisch versorgt wird, zum Schweißpunkt SP, insbesondere einen Kreuzungspunkt eines Längsdrahtes LD und eines Querdrahtes QD. Unterhalb des Schweißpunktes SP ist eine durchgängige Schweißunterlage 12 angeordnet, die nicht einem Schweißwagen 8 zugeordnet ist oder in Y-Richtung beweglich ausgeführt sein muss, was die Konstruktion der Schweißeinheit 7 stark vereinfacht.

Zweckmäßig ist am Schweißkopfrahmen 17 auch die Fixiereinheit 6 verbunden, die gemäß Fig. 8 als Zangenelement 16 ausgeführt ist. Zur einfachen und sicheren Errichtung der vorbestimmten Anordnung von Längsdraht LD und Querdraht QD ist an der Schweißeinheit 6 ein Querdrahtanschlag 14 vorgesehen, welcher starr immer mitfährt und zumindest einen Freiheitsgrad in der Bewegung des Querdrahtes QD (hier: die Verrückung in X-Richtung) unterbindet. Um einen Querdraht QD auf einfache Weise sogar zu halten, sind die Queranschläge 14 magnetisch. Um nichtmagnetisierbare Drähte zu halten, können die Queranschläge 14 als Zangen ausgebildet sein.

Ein Querdrahtanschlag 14 kann einfach ausgebildet sein, z.B. in Form einer ausreichend festen Anschlagskante.

Der Querdrahtanschlag 14 und/oder die Fixiereinheit 6 können am Schweißkopfrahmen 17 aus der Schweißlinie oder dem Bereich der Längsdrähte LD herausfahrbar ausgeführt sein, um sie in den Zustand "inaktiv" zu setzen, der, wie oben dargelegt, beim Verfahren in Y-Richtung und Herstellung einer besonderen Teilung des Drahtgitters notwendig ist. Erfindungsgemäß werden der Querdrahtanschlag 14 und/oder die Fixiereinheit 6 in Z-Richtung herausgefahren.

Mit dem Verfahren und der Anlage können auf hochvariable Weise Drahtgittermatten mit beliebigen und kontinuierlich variierenden Teilungen, Größen, Drahtanzahl und Drahtdurchmessern, mit Überständen oder auch Aussparungen produziert werden. Aufeinanderfolgend produzierte Drahtgittermatten können einzeln oder in (Klein-)Serien beliebig voneinander abweichen, ohne dass die Änderungen der Anlage merklich Zeit in Anspruch nehmen. Das oben ausführlich erläuterte Beispiel für eine Variation einer Teilung lässt sich beliebig oft an einer Drahtgittermatte wiederholen.

Die Fig. 9 und 10 zeigen einen Teil eines Mattenauszugs mit einem sich im Wesentlichen in Y-Richtung und somit parallel zu verschweißten Querdrähten QD erstreckenden Auszugsbalken 22, an welchem eine Vielzahl von Hakenelementen 21 befestigt sind. Die Zangenelemente oder auch Hakenelemente 21 fahren über Trägereinheiten 24 - elektrisch, pneumatisch, per Federkraft oder hydraulisch getrieben - in eine untere, "aktive" Position, in welcher sie einen Querdraht QD greifen und mit sich in X-Richtung ziehen können. Auf diese Weise werden hergestellte Drahtgittermatten wahlweise schrittweise oder vollständig ausgezogen. Letzteres erfolgt auch zum automatischen Stapeln der Produkte.

Da die Längsdrahtteilungen der Drahtgittermatten erfindungsgemäß hochvariabel sind, kommt es vor, dass bestimmte Hakenelemente 21 des Mattenauszugs von einem gerade mit ihnen fluchtenden Längsdraht LD daran gehindert werden, den Querdraht QD zu greifen. Um dem entgegenzuwirken, werden ausreichend viele Hakenelemente 21 am Auszugsbalken 22 bereitgehalten und jeweils von der Programmsteuerung nur diejenigen in die Mattenebene gesenkt, die in eine freie Masche der Drahtgittermatte greifen können. Beispielsweise können die Stelleinheiten 24 jeweils zwei Hakenelemente 21 aufweisen, von denen nur das oder die zum Ausziehen einer Matte gesenkt wird oder werden, die nicht durch einen fluchtenden Längsdraht LD blockiert würden.

Zum Schutz und zur verbesserten Wirkung ist ferner optional eine Führungsplatte 23 am Auszugsbalken 22 vorgesehen, die sich etwas oberhalb der Mattenebene und parallel zu ihr erstreckt, und welche Ausnehmungen für jedes Hakenelement 21 aufweist, durch welche sie zwischen den beiden Positionen "aktiv" und "inaktiv" wechseln können. In der oberen Position - passiv oder "inaktiv" (siehe hochgefahrene Hakenelemente 21b) - bleiben die jeweiligen Hakenelemente 21 außerhalb des Bereiches bewegter Teile während des Herstellungsprozesses.

Es können für jede Trägereinheit 24 zwei Hakenelemente 21 vorgesehen sein, die untereinander einen Abstand (in Y-Richtung) in der Größenordnung mindestens eines Längsdrahtdurchmessers, maximal aber den der kleinsten Längsdrahtteilung aufweist, um jeweils nur eines dieser Hakenelemente 21 sicher zu aktivieren.

In Fig. 10 hat die schematische Drahtgittermatte vier variable Teilungen V1, V2, V3 und V4 der Querdrähte QD und Längsdrähte LD, während die Paare von Hakenelementen 21 im festen Raster R analog zu den Längsdrahtführungselementen 2 der zugeführten Längsdrähte LD angeordnet sind.

Eine mit der erfindungsgemäßen Vorrichtung ausgestattete Gittermattenschweißanlage zur Herstellung von variablen Bewehrungsgittern ist also sehr flexibel und ohne Einschränkungen hinsichtlich der Produktteilung. Es herrscht keine Produktkonfigurationseinschränkung hinsichtlich LD- und QD-Teilung sowie unterschiedlicher Durchmesserkombinationen der verwendeten Drähte. Es gibt ferner keine Sperrbereiche von der Drahtbereitstellung und -aufnahme bis zu den Produktstapelkomponenten. Die so erzielten Vorteile der vollautomatischen Anlage und des Verfahrens zur Herstellung von stufenlosen Teilungen liegen auch darin, dass die Längsdrahtüberstände und die Querdrahtüberstände variabel sind.

### Bezugszeichenliste

- 1: Aufnahmetisch
- 2: Längsdrahtführungselement
- 3: Längsdrahtzuführeinheit
- 4: Längsdrahtzangenelement
- 5: Schweißportal
- 6: Fixiereinheit
- 7: Schweißeinheit
- 8: Schweißwagen
- 11: Stromband
- 12: Schweißunterlage
- 13: Schweißelektrode
- 14: Querdrahtanschlag
- 15: Schweißkraftaufbringung
- 16: Zangenelement
- 17: Schweißkopfrahmen
- 18: Fahrwerk
- 21: Hakenelement
- 22: Auszugsbalken
- 23: Führungsplatte
- 24: Trägereinheit
- R: Raster
- V1: variable Teilung 1 in Längsrichtung
- V2: variable Teilung 2 in Längsrichtung
- V3: variable Teilung 3 in Längsrichtung oder Querrichtung
- V4: variable Teilung 4 in Längsrichtung
- LD: Längsdraht
- QD: Querdraht
- SP: Schweißpunkt

## Patentansprüche

1. Verfahren zum Herstellen einer Drahtgittermatte aus sich kreuzenden Längsdrähten (LD) und Querdrähten (QD) mit den Schritten:
(i) Vorschub einer Schar von Längsdrähten (LD) entlang einer X-Richtung zu einem Schweißportal (5) mit Schweißeinheiten (7), wobei die Längsdrähte (LD) durch lösbare und sich in X-Richtung mitbewegbare Längsdrahtzangenelemente (4) parallel zueinander in einem feststehenden Raster (R) bewegt und gehalten werden,
(ii) Schweißen mindestens eines ersten Längsdrahtes (LD) mit einem ersten Querdraht (QD),
das Verfahren **gekennzeichnet durch** folgende Schritte:
(iii) Lösen der Klemmung des mindestens einen ersten Längsdrahtes (LD) und Fahren der nichtverschweißten Längsdrähte in (-Y)-Richtung, welche im Wesentlichen senkrecht zur X-Richtung liegt, um das Raster (R) mindestens eines Längsdrahtes (LD) zu ändern,
(iv) Schweißen mindestens eines zweiten Längsdrahtes (LD) mit dem ersten Querdraht (QD),
(vii) mehrmaliger, getakteter Vorschub der Schar von Längsdrähten (LD) in X-Richtung und gleichzeitiges Schweißen aller zuvor geschweißter Längsdrähte (LD) mit einem zweiten und weiteren Querdrähten (QD).

2. Verfahren nach Anspruch 1, wobei nach Schritt (iv) und vor Schritt (vii) die Schritte erfolgen:
(v) Lösen der Klemmung des mindestens einen zweiten Längsdrahtes (LD) und Fahren der nichtverschweißten Längsdrähte in (+Y)-Richtung oder in (-Y)-Richtung,
(vi) Schweißen mindestens eines dritten Längsdrahtes (LD) mit dem ersten Querdraht (QD).

3. Verfahren nach Anspruch 1 oder 2, wobei der Schritt (i) die Teilschritte umfasst:
(i-a) Entnahme einer Schar von Längsdrähten (LD), die in einem feststehenden Raster (R) durch Längsdrahtführungselemente (2) auf einem Aufnahmetisch (1) bereitgehalten werden, durch eine Längsdrahtzuführeinheit (3), die an den Aufnahmetisch (1) in (-X)-Richtung heranfahrbar ist, und an welcher die Längsdrähte (LD) in Längsdrahtzangenelementen (4) je nach erforderlichem Längsdrahtüberstand geklemmt werden,
(i-b) Fahren der Längsdrahtzuführeinheit (3) in (+X)-Richtung mitsamt der Längsdrahtschar.

4. Verfahren nach einem der Ansprüche 1 bis 3, mit dem weiteren Schritt:
(viii) Auszug einer Drahtgittermatte hinter dem Schweißportal (5) mit einem in X-Richtung beweglichen Auszugsbalken (22), welcher mit einer Vielzahl von Hakenelementen (21) temporär an einem der Querdrähte (QD) einer Drahtgittermatte einhakt oder eingreift.

5. Verfahren nach Anspruch 4, wobei in Schritt (viii) von einer Vielzahl von Hakenelementen (21) nur diejenigen in Wirkung gesetzt werden, die gemäß des produzierten Rasters (R) an der Drahtgittermatte zwischen zwei benachbarten Längsdrähten (LD) liegen.

6. Gitterschweißanlage zum Schweißen einer Drahtgittermatte aus sich kreuzenden Längsdrähten (LD) und Querdrähten (QD) mit einer getakteten Zufuhrvorrichtung für eine Schar von Längsdrähten (LD) in eine X-Richtung, mit einer Zubringervorrichtung für senkrecht zu den Längsdrähten (LD) liegenden Querdrähten (QD) sowie mit einem Schweißportal (5) zum Verschweißen der Drähte an ihren Kreuzungspunkten, mit einem Aufnahmetisch (1) und wobei eine taktweise in X-Richtung hin und her zwischen dem Aufnahmetisch (1) und den Schweißportal (5) verfahrbare Längsdrahtzuführeinheit (3) angeordnet ist, die ihrerseits Längsdrahtzangenelemente (4) für die Längsdrähte (LD) aufweist, **dadurch gekennzeichnet, dass** der Aufnahmetisch (1) zur Aufnahme der Schar parallel und mit Längsdrahtführungselemente (2) in einem feststehenden Raster (R) zueinander liegender Längsdrähte (LD) vorgesehen ist, wobei ferner die Längsdrahtzuführeinheit (3) in Y-Richtung verfahrbar ist, und wobei der Abstand des Schweißportals (5) von den Längsdrahtführungselementen (2) mindestens so bemessen ist, dass ein darin befindlicher Längsdraht (LD) bei maximaler Auslenkung im elastischen Bereich verformbar bleibt.

7. Gitterschweißanlage nach Anspruch 6, **dadurch gekennzeichnet, dass** im Schweißportal (5) eine Vielzahl von Schweißeinheiten (7) vorgesehen sind, vor denen in Produktionsrichtung X gesehen jeweils eine Fixiereinheit (6) für einen Längsdraht (LD) angeordnet ist.

8. Gitterschweißanlage nach Anspruch 6 oder 7, **dadurch gekennzeichnet, dass** im Schweißportal (5) eine Vielzahl von Schweißeinheiten (7) vorgesehen sind, an denen jeweils ein Querdrahtanschlag (14) angeordnet ist.

9. Gitterschweißanlage nach einem der Ansprüche 6 bis 8,
**dadurch gekennzeichnet, dass** in Produktionsrichtung X gesehen nach dem Schweißportal (5) ein in X-Richtung bewegbarer, sich im Wesentlichen in Y-Richtung erstreckender Auszugsbalken (22) mit einer Vielzahl von Hakenelementen (21) zum Transport von Drahtgittermatten angeordnet ist, wobei die Hakenelemente (21) einzeln zwischen zwei Positionen schwenkbar sind, in welchen die Hakenelemente (21) entweder außerhalb der Gitterebene oder innerhalb der Gitterebene befindlich sind.

10. Gitterschweißanlage nach Anspruch 9, **dadurch gekennzeichnet, dass** am Auszugsbalken (22) mindestens eine Führungsplatte (23) vorgesehen ist, welche sich in einem vorbestimmten Abstand oberhalb der Gitterebene erstreckt, und welche Durchlässe für die Hakenelemente (21) aufweist, durch die die Hakenelemente (21) zwischen den beiden Positionen verfahrbar sind.

## Claims

1. A method for producing a wire mesh mat from intersecting longitudinal wires (LD) and transverse wires (QD) comprising the steps of:
(i) feeding of a set of longitudinal wires (LD) along an X direction to a welding portal (5) with welding units (7), wherein the longitudinal wires (LD) are moved and held parallel to one another in a fixed grid (R) by releasable longitudinal wire gripper elements (4) which can move along in the X direction,
(ii) welding of at least one first longitudinal wire (LD) with a first transverse wire (QD),
the process being **characterized by** the following steps:
(iii) releasing of the clamping of the at least one first longitudinal wire (LD) and moving of the non-welded longitudinal wires in the (-Y) direction, which is essentially perpendicular to the X direction, in order to adjust the grid (R) of at least one longitudinal wire (LD),
(iv) welding of at least one second longitudinal wire (LD) to the first transverse wire (QD),
(vii) multiple, clocked feeding of the set of longitudinal wires (LD) in the X direction and simultaneous welding of all previously welded longitudinal wires (LD) with a second and further transverse wires (QD).

2. The method according to claim 1, wherein the following steps are carried out after step (iv) and before step (vii):
(v) releasing of the clamping of the at least one second longitudinal wire (LD) and moving of the non-welded longitudinal wires in the (+Y) direction or in the (-Y) direction,
(vi) welding of at least a third longitudinal wire (LD) to the first transverse wire (QD).

3. The method according to claim 1 or 2, wherein step (i) comprises the substeps of:
(i-a) removing of a set of longitudinal wires (LD), which are held ready in a fixed grid (R) by longitudinal wire guide elements (2) on a receiving table (1), by a longitudinal wire feed unit (3), which can be moved towards the receiving table (1) in the (-X) direction and to which the longitudinal wires (LD) are clamped in longitudinal wire gripper elements (4) depending on the required longitudinal wire distance,
(i-b) moving of the longitudinal wire feed unit (3) in the (+X) direction together with the set of longitudinal wires.

4. The method according to any one of claims 1 to 3, comprising the further step of:
(viii) pulling out of a wire mesh mat behind the welding portal (5) with a pull-out beam (22) movable in the X direction, which temporarily hooks or engages with a plurality of hook elements (21) on one of the transverse wires (QD) of a wire mesh mat.

5. The method according to claim 4, wherein only those of a plurality of hook elements (21) are brought into action in step (viii) which, according to the produced grid (R), lie on the wire mesh mat between two adjacent longitudinal wires (LD).

6. A mesh welding system for welding a wire mesh mat from intersecting longitudinal wires (LD) and transverse wires (QD) with a clocked feed device for a set of longitudinal wires (LD) in an X direction, with a feed device for transverse wires (QD) lying perpendicular to the longitudinal wires (LD) and with a welding portal (5) for welding the wires at their intersection points, with a receiving table (1), and wherein a longitudinal wire feed unit (3) which can be moved back and forth cyclically in the X direction is arranged between the receiving table (1) and the welding portal (5), which in turn has longitudinal wire gripper elements (4) for the longitudinal wires (LD), **characterized in that** the receiving table (1) for receiving the set of longitudinal wires (LD) lying parallel to one another and with longitudinal wire guide elements (2) in a fixed grid (R) is provided, wherein the longitudinal wire feed unit (3) can also be moved in the Y direction and wherein the distance of the welding portal (5) from the longitudinal wire guide elements (2) is at least dimensioned such that a longitudinal wire (LD) located therein remains deformable in the elastic range at maximum deflection.

7. The mesh welding system according to claim 6, **characterized in that** a plurality of welding units (7) are provided in the welding portal (5), in front of each of which a fixing unit (6) for a longitudinal wire (LD) is arranged as seen in the production direction X.

8. The mesh welding system according to claim 6 or 7, **characterized in that** a plurality of welding units (7) are provided in the welding portal (5), on each of which a transverse wire stop (14) is arranged.

9. The mesh welding system according to any one of claims 6 to 8, **characterized in that** a pull-out beam (22), which can be moved in the X direction and extends essentially in the Y direction, is arranged downstream of the welding portal (5) in the production direction X and has a plurality of hook elements (21) for transporting wire mesh mats, wherein the hook elements (21) are individually pivotable between two positions, in which the hook elements (21) are located either outside the mesh plane or inside the mesh plane.

10. The mesh welding system according to claim 9, **characterized in that** at least one guide plate (23) is provided on the pull-out beam (22), which extends at a predetermined distance above the mesh plane and which has passages for the hook elements (21), through which the hook elements (21) can be moved between the two positions.

## Revendications

1. Procédé de fabrication d'un treillis en fils métalliques à partir de fils longitudinaux (LD) et de fils transversaux (QD) qui se croisent, comprenant les étapes suivantes:
(i) avancement d'un groupe de fils longitudinaux (LD) le long d'une direction X vers un portique de soudage (5) avec des unités de soudage (7), les fils longitudinaux (LD) étant déplacés et maintenus parallèlement les uns aux autres dans une trame fixe (R) par des éléments de pince à fils longitudinaux (4) amovibles et pouvant se déplacer avec eux dans la direction X,
(ii) le soudage d'au moins un premier fil longitudinal (LD) avec un premier fil transversal (QD),
le procédé **caractérisée par** les étapes suivantes:
(iii) desserrer le serrage du au moins un premier fil longitudinal (LD) et déplacer les fils longitudinaux non soudés dans la direction (-Y), qui est essentiellement perpendiculaire à la direction X, pour modifier la trame (R) du au moins un fil longitudinal (LD),
(iv) le soudage du au moins un deuxième fil longitudinal (LD) avec le premier fil transversal (QD),
(vii) avancer plusieurs fois, de manière cadencée, le groupe de fils longitudinaux (LD) dans la direction X et souder simultanément tous les fils longitudinaux (LD) précédemment soudés avec un deuxième fil transversal et d'autres fils transversaux (QD).

2. Procédé selon la revendication 1, dans lequel, après l'étape (iv) et avant l'étape (vii), les étapes sont:
(v) desserrer le serrage du au moins un deuxième fil longitudinal (LD) et déplacer les fils longitudinaux non soudés dans la direction (+Y) ou dans la direction (-Y),
(vi) soudage d'au moins un troisième fil longitudinal (LD) avec le premier fil transversal (QD).

3. Procédé selon la revendication 1 ou 2, dans lequel l'étape (i) comprend les sous-étapes:
(i-a) prélèvement, par une unité d'amenée de fils longitudinaux (3), d'un groupe de fils longitudinaux (LD) qui sont tenus à disposition sur une table de réception (1), selon une trame fixe (R), par des éléments de guidage de fils longitudinaux (2), qui peut être approchée de la table de réception (1) dans la direction (-X), et sur laquelle les fils longitudinaux (LD) sont serrés dans des éléments de pince à fils longitudinaux (4) en fonction du dépassement nécessaire des fils longitudinaux,
(i-b) déplacement de l'unité d'alimentation en fils longitudinaux (3) dans la direction (+X) en ce compris le groupe de fils longitudinaux.

4. Procédé selon l'une des revendications 1 à 3, comprenant l'étape supplémentaire consistant à:
(viii) extraction d'un treillis en fils métalliques derrière le portique de soudage (5) avec une barre d'extraction (22) mobile dans la direction X, qui s'accroche ou s'engage temporairement avec une pluralité d'éléments de crochet (21) sur l'un des fils transversaux (QD) d'un treillis en fils métalliques.

5. Procédé selon la revendication 4, dans lequel, à l'étape (viii), parmi une pluralité d'éléments de crochet (21), seuls ceux qui sont situés entre deux fils longitudinaux adjacents (LD) selon la trame produite (R) sur le treillis en fils métalliques sont mis en action.

6. Installation de soudage de treillis pour le soudage d'un treillis en fils métalliques composé de fils longitudinaux (LD) et de fils transversaux (QD) qui se croisent, avec un dispositif d'alimentation cadencé pour un groupe de fils longitudinaux (LD) dans une direction X, avec un dispositif d'amenée pour des fils transversaux (QD) disposés perpendiculairement aux fils longitudinaux (LD) ainsi qu'avec un portique de soudage (5) pour souder les fils à leurs points de croisement, avec une table de réception (1) et une unité d'amenée de fils longitudinaux (3) déplaçable en va-et-vient de manière cadencée dans la direction X étant disposée entre la table de réception (1) et le portique de soudage (5), qui présente à son tour des éléments de pince à fils longitudinaux (4) pour les fils longitudinaux (LD), **caractérisée en ce que** la table de réception (1) est prévue pour recevoir le groupe de fils longitudinaux (LD) parallèles et disposés les uns par rapport aux autres avec des éléments de guidage de fils longitudinaux (2) dans une trame fixe (R), l'unité d'amenée de fils longitudinaux (3) étant en outre déplaçable dans la direction Y, et la distance du portique de soudage (5) par rapport aux éléments de guidage de fils longitudinaux (2) étant au moins dimensionnée de telle sorte qu'un fil longitudinal (LD) qui s'y trouve reste déformable dans le domaine élastique en cas de déviation maximale.

7. Installation de soudage de treillis selon la revendication 6, **caractérisée en ce qu'**il est prévu dans le portique de soudage (5) une pluralité d'unités de soudage (7) devant lesquelles est disposée, vue dans le sens de production X, une unité de fixation (6) pour un fil longitudinal (LD).

8. Installation de soudage de treillis selon la revendication 6 ou 7, **caractérisée en ce qu'**il est prévu dans le portique de soudage (5) une pluralité d'unités de soudage (7) sur chacune desquelles est disposée une butée de fil transversal (14).

9. Installation de soudage de treillis selon l'une des revendications 6 à 8, **caractérisée en ce que**, vu dans le sens de production X après le portique de soudage (5), une barre d'extension (22) mobile dans le sens X et s'étendant essentiellement dans le sens Y est disposée avec une pluralité d'éléments de crochet (21) pour le transport de treillis en fils métalliques, les éléments de crochet (21) pouvant pivoter individuellement entre deux positions dans lesquelles les éléments de crochet (21) se trouvent soit en dehors du plan du treillis, soit à l'intérieur du plan du treillis.

10. Installation de soudage de treillis selon la revendication 9, **caractérisée en ce qu'**il est prévu sur la barre d'extraction (22) au moins une plaque de guidage (23) qui s'étend à une distance prédéterminée au-dessus du plan du treillis et qui présente des passages pour les éléments de crochet (21), à travers lesquels les éléments de crochet (21) peuvent être déplacés entre les deux positions.
